# EUROPÄISCHE PATENTSCHRIFT

(11) **EP 0 934 186 B1**
(45) Veröffentlichungstag und Bekanntmachung des Hinweises auf die Patenterteilung: **18.12.2002**
(21) Anmeldenummer: 97910415.5
(22) Anmeldetag: 06.10.1997
(51) Int. Cl.: B60S 1/52, B60S 1/48

(54) **AUSSCHLIESSLICH DURCH ANSPRÜHEN MIT WASCHFLÜSSIGKEIT ARBEITENDE SCHEIBENREINIGUNGSANLAGE**
HEADLIGHT CLEANING SYSTEM OPERATING EXCLUSIVELY BY SPRAYING WITH WASHING LIQUID
SYSTEME DE LAVAGE DE VITRES FONCTIONNANT UNIQUEMENT PAR ASPERSION DE DETERGENT LIQUIDE

(30) Priorität: 14.11.1996 DE 19646972
(43) Veröffentlichungstag der Anmeldung: 11.08.1999
(73) Patentinhaber: Siemens Aktiengesellschaft, 80333 München (DE)
(72) Erfinder: BANDEMER, Joachim, D-61130 Nidderau (DE); KOBER, Rainer, D-64297 Darmstadt (DE); HAHN, Torsten, D-34576 Homberg (DE)
(86) Internationale Anmeldenummer: EP9705478
(87) Internationale Veröffentlichungsnummer: WO98021076

(56) Entgegenhaltungen:
- DE-A- 3 842 375
- DE-A- 4 426 051
- DE-A- 4 439 445
- FR-A- 2 377 911
- FR-A- 2 646 801
- FR-A- 2 682 658
- FR-A- 2 709 715
- GB-A- 2 026 851
- GB-A- 2 223 424
- PATENT ABSTRACTS OF JAPAN vol. 011, no. 120 (M-580), 15.April 1987 & JP 61 261151 A (NIPPON SOKEN INC), 19.November 1986,

## Beschreibung

Die Erfindung betrifft eine ausschließlich durch Ansprühen mit Waschflüssigkeit arbeitende Scheibenreinigungsanlage für Scheiben eines Kraftfahrzeuges, insbesondere für Scheiben von Kraftfahrzeugleuchten, mit einem von einem Elektromotor mit Abstand über die Scheibe beweglichen Wascharm und mit einer auf dem Wascharm angeordneten Waschdüse, welche zum Sprühen von Waschflüssigkeit auf die Scheibe vorgesehen ist.

Bei einer bekannten Scheibenreinigungsanlage wird die Waschdüse von dem Wascharm von einer Ruhestellung neben der Scheibe in eine Betriebsstellung in eine zentrale Position über der Scheibe bewegt. Hierdurch ist die Scheibenreinigungsanlage von der äußeren Gestaltung des Kraftfahrzeuges weitgehend unabhängig. Da jedoch die Waschdüse aus der zentralen Position über der Scheibe auch die Randbereiche der Scheibe reinigen muß, hat die Waschdüse in Betriebsstellung einen großen Abstand zu der Scheibe. Hierdurch kann der Waschflüssigkeitsstrahl von dem Fahrtwind abgelenkt werden. Zur Reinigung der Scheibe benötigt die bekannte Scheibenreinigungsanlage deshalb einen besonders hohen Druck an der Waschdüse und eine große Menge an Waschflüssigkeit. Die bekannte Scheibenreinigungsanlage hat deshalb eine sehr starke Waschflüssigkeitspumpe und einen Waschflüssigkeitsbehälter mit einem großen Volumen. Dies führt jedoch zu einem hohen baulichen Aufwand und zu hohen Fertigungskosten der Scheibenreinigungsanlage.

Weiterhin ist eine Waschdüse bekannt geworden, welche eine Wirbelkammer mit einem axialen und einem tangentialen Eingang aufweist. Hierdurch kann abwechselnd ein kegelförmiger und ein zentraler Waschflüssigkeitsstrahl erzeugt werden. Der auf der Scheibe haftende Schmutz wird damit von innen nach außen zum Seitenrand gespült, wodurch eine besonders gute Reinigungswirkung erzielt werden soll. Da sich die Waschdüse auch hierbei in einer zentralen Position über der Scheibe befindet, ist auch bei dieser Gestaltung insbesondere zur Reinigung der Randbereiche der Scheibe ein sehr hoher Druck an der Waschdüse und eine große Menge Waschflüssigkeit erforderlich.

Man könnte daran denken, die Reinigungswirkung mit einem Scheibenwischer zu verbessern, der den von der Waschflüssigkeit gelösten Schmutz wegwischt. Dies ist jedoch insbesondere bei aus durchsichtigem Kunststoff gefertigten Scheiben von Kraftfahrzeugleuchten nicht möglich, da diese von dem Scheibenwischer zerkratzt werden können. In zukünftigen Kraftfahrzeugen könnten beispielsweise auch Videokameras eingesetzt werden, deren Scheiben ebenfalls von einem Zerkratzen durch einen Scheibenwischer geschützt werden müssen.

Aus der GB-A-2 026 851 ist eine Scheibenreinigungsvorrichtung mit einer auf einem ausfahrbaren Kolben angeordnete Waschdüse bekannt. Im Betrieb der Scheibenwaschvorrichtung wird der Kolben durch den Druck der Waschflüssigkeit aus einer Ruheposition heraus über die Scheibe bewegt. Nachteilig hierbei ist die lange Reaktionszeit der Scheibenreinigungsvorrichtung, die in dem für eine Bewegung des Kolbens notwendigen Druckaufbau in der Flüssigkeitsleitung begründet ist.

Es ist weiterhin eine Reinigungsvorrichtung mit einem scheibenwischerähnlichem Arm, an dem eine oder mehrere Waschdüsen angeordnet sind, bekannt (DE-A-44 26 051). Nachteilig an dieser Vorrichtung ist, daß die für die Reinigung notwendige Bewegung nicht an die zu reinigende Fläche angepaßt ist. So wird entweder nicht die gesamte Streuscheibe gereinigt oder ein beträchtlicher Teil der Waschflüssigkeit wird in einigen Bereichen der Streuscheibe an dieser vorbeigesprüht.

Der Erfindung liegt das Problem zugrunde, eine Scheibenreinigungsanlage der eingangs genannten Art so zu gestalten, daß sie die Scheibe mit einer besonders geringen Menge an Waschflüssigkeit gründlich und ohne die Gefahr eines Zerkratzens der Scheibe reinigt.

Dieses Problem wird bei einer Scheibenreinigungsanlage nach der DE-A-4 426 051 erfindungsgemäß dadurch gelöst, daß die Waschdüse zum Besprühen eines Teilbereichs der Scheibe ausgebildet und derart von dem Wascharm so über den zu reinigenden Bereich der Scheibe bewegbar ist, daß die Projektion der Bewegung der Waschdüse auf die Scheibe linear ist.

Da die Waschdüse der erfindungsgemäßen Scheibenreinigungsanlage nur einen Teilbereich der Scheibe mit Waschflüssigkeit besprüht, kann sie mit einem wesentlich geringeren Abstand über der Scheibe angeordnet sein als die Waschdüse der bekannten Scheibenreinigungsanlage. Durch den geringen Abstand der Waschdüse von der Scheibe wird der Waschflüssigkeitsstrahl nur unwesentlich von dem Fahrtwind abgelenkt. Hierdurch wird auf der Scheibe haftender Schmutz entsprechend der Bewegung des Wascharms weggespült, so daß die Scheibe besonders gründlich gereinigt wird. Weiterhin sind eine besonders kleine Waschflüssigkeitspumpe und ein sehr kleiner Waschflüssigkeitsbehälter erforderlich, da Verluste an Waschflüssigkeit durch den geringen Abstand der Waschdüse zu der Scheibe besonders gering gehalten werden. Die erfindungsgemäße Scheibenreinigungsanlage ist deshalb besonders kostengünstig herstellbar und hat einen besonders geringen Verbrauch an Waschflüssigkeit. Weiterhin ist ein Zerkratzen der Scheibe durch das ausschließliche Reinigen mit dem Waschflüssigkeitsstrahl ausgeschlossen. Beliebig große Scheiben lassen sich durch die Anordnung mehrerer, sich im Sprühbereich geringfügig überlappender Waschdüsen reinigen.

Die erfindungsgemäße Scheibenreinigungsanlage hat gemäß einer vorteilhaften Weiterbildung der Erfindung eine besonders hohe Reinigungswirkung bei einem besonders geringen Verbrauch an Waschflüssigkeit, wenn die Waschdüse als Fluidic-Düse mit einem im wesentlichen quer zu der Bewegungsrichtung des Wascharms oszillierenden Waschflüssigkeitsstrahl ausgebildet ist. Solche Fluidic-Düsen erzeugen selbst bei einem relativ niedrigen Druck in der Waschflüssigkeitsleitung einen scharfen, punktförmigen Waschflüssigkeitsstrahl, der ständig um einen vorgesehenen Winkel seitlich oszilliert. Hierdurch weist die Waschdüse einen streifen- oder ellipsenförmigen Sprühbereich auf. Mit der Bewegung der Waschdüse durch den Wascharm wird der Waschflüssigkeitsstrahl über die gesamte Scheibe geführt.

Der Wascharm gestaltet sich gemäß einer anderen vorteilhaften Weiterbildung der Erfindung konstruktiv besonders einfach, wenn er zur Aufnahme eines zu mehreren Waschdüsen führenden Waschflüssigkeitskanals rohrförmig gestaltet ist und einen Anschluß für eine Waschflüssigkeitsleitung aufweist.

Bei mehreren an einem gemeinsamen Waschflüssigkeitskanal angeschlossenen Waschdüsen erhalten alle Waschdüsen dieselbe Menge Waschflüssigkeit, wenn der Waschflüssigkeitskanal gemäß einer anderen vorteilhaften Weiterbildung der Erfindung von dem Anschluß der Waschflüssigkeitsleitung aus gesehen eine sich verjüngende innere Kontur aufweist.

In der Nähe der Waschdüsen ist gemäß einer anderen vorteilhaften Weiterbildung der Erfindung ständig Waschflüssigkeit vorhanden, wenn in dem Waschflüssigkeitskanal ein Rückschlagventil angeordnet ist. Durch diese Gestaltung wird eine Verzögerung der Reinigung der Scheibe nach einem Einschalten der Scheibenreinigungsanlage besonders gering gehalten.

Ein Einfrieren der Waschdüsen läßt sich gemäß einer anderen vorteilhaften Weiterbildung der Erfindung einfach vermeiden, wenn in dem Waschflüssigkeitskanal und/oder an den Waschdüsen ein Heizelement angeordnet ist.

Die Scheibenreinigungsanlage ist gemäß einer anderen vorteilhaften Weiterbildung der Erfindung besonders kostengünstig herstellbar, wenn der Wascharm schwenkbar gelagert ist.

Bei den bekannten Scheibenreinigungsanlagen lassen sich unregelmäßig geformte Scheiben nur teilweise reinigen, da hierbei die Waschdüse die Ränder der Scheiben nur unzureichend mit Waschflüssigkeit besprüht. Scheiben mit einer unregelmäßigen Form werden jedoch gemäß einer anderen vorteilhaften Weiterbildung der Erfindung nahezu vollständig gereinigt, wenn sie Mittel zum Einstellen des Abstandes der Waschdüse von der Scheibe währen der Bewegung der Waschdüse aufweist. Durch diese Gestaltung hat die Waschdüse von der Scheibe einen besonders großen Abstand, wenn ein breiter Bereich der Scheibe einzusprühen ist. Da sich der Sprühbereich insbesondere von Fluidic-Düsen mit größer werdendem Abstand von der Waschdüse verbreitert, wird die Scheibe zuverlässig bis in ihre Randbereiche gereinigt.

Der Wascharm ist gemäß einer anderen vorteilhaften Weiterbildung der Erfindung besonders stabil, wenn der Wascharm einen an zwei gegenüberliegenden Seiten der Scheibe gelagerten Bügel aufweist. Durch diese Gestaltung lassen sich beispielsweise runde oder elliptische Scheiben besonders einfach reinigen, da sich hierbei der Abstand der Waschdüse von der Scheibe und damit die Breite des eingesprühten Bereichs gleichmäßig mit dem Schwenkwinkel des Wascharms verändert. Ovale Scheiben werden mit mehreren, nebeneinander angeordneten Waschdüsen vollständig gereinigt, ohne daß Waschflüssigkeit neben die Scheibe gesprüht wird.

Die Waschdüse sprüht gemäß einer anderen vorteilhaften Weiterbildung der Erfindung stets senkrecht auf die Scheibe, wenn der Wascharm zwei parallel verlaufende Bügel aufweist und die Waschdüse gegenüber jedem der Bügel schwenkbar gelagert ist.

Eine seitliche Begrenzung des Sprühbereichs der mit einem veränderlichen Abstand über die Scheibe bewegten Waschdüse läßt sich gemäß einer vorteilhaften Weiterbildung der Erfindung einfach einstellen, wenn die Waschdüse quer zu ihrer Bewegungsrichtung geneigt ist.

Insbesondere bei gewölbten Scheiben von Kraftfahrzeugleuchten kann mittels des schwenkbar gelagerten Wascharms häufig der vorgesehene Abstand der Waschdüsen von der Scheibe eingehalten werden. Die Waschdüsen weisen gemäß einer anderen vorteilhaften Weiterbildung der Erfindung auch bei gewölbten Scheiben der vorgesehene Abstand zu der Scheibe auf, wenn der Wascharm eine längs verschieblich gelagerte, der Kontur der Scheibe entsprechend gestaltete Schubstange hat.

Die Waschdüsen sind gemäß einer anderen vorteilhaften Weiterbildung der Erfindung zuverlässig vor einer Beschädigung geschützt, wenn die Waschdüsen in einer Grundstellung in einer Ausnehmung eines an der Scheibe angrenzenden Bauteils des Kraftfahrzeuges versenkt sind.

Eine Verschmutzung der in der Ausnehmung versenkten Waschdüsen läßt sich gemäß einer anderen vorteilhaften Weiterbildung der Erfindung zuverlässig vermeiden, wenn der Wascharm eine die Ausnehmung in Grundstellung verschließende Abdeckung hat. Weiterhin hat die Scheibenreinigungsanlage durch diese Gestaltung nahezu keinen Einfluß auf den Luftwiderstand des Kraftfahrzeuges. Die Abdeckung kann aus optischen Gründen in der Farbe des an die Scheibe angrenzenden Bauteils des Kraftfahrzeuges lackiert werden.

Der Wascharm läßt sich gemäß einer anderen vorteilhaften Weiterbildung besonders kostengünstig fertigen, wenn er aus Kunststoff im Spritzgießverfahren gefertigt ist. Bei dem die Abdeckung für die Ausnehmung aufweisenden Wascharm läßt sich die Abdeckung beispielsweise in der Farbe des an die Scheibe angrenzenden Bauteils des Kraftfahrzeuges einfärben.

Die Montage der erfindungsgemäßen Scheibenreinigungsanlage gestaltet sich besonders einfach, wenn eine Führung der Schubstange oder eine Lagerung des Wascharms einteilig mit einem Gehäuse der Kraftfahrzeugleuchte gefertigt ist.

Erfahrungsgemäß beeinflussen Scheibenreinigungsanlagen das optische Erscheinungsbild des Fahrzeugs erheblich. Ein besonderer Vorteil durch einen lediglich beim Reinigungsvorgang sichtbaren Wascharm ergibt sich, wenn der Wascharm als ein entsprechend der Kontur eines Karosserieelementes ausgeformtes Bauteil ausgebildet und aus diesem heraus beweglich angeordnet ist. Zweckmäßigerweise befindet sich dieses Karosserieelement in einem Bereich unmittelbar vor der Scheibe.

Bei der Fahrzeugproduktion ist ein hoher Anteil bereits vorgefertigter und vormontierter Komponenten besonders rentabel. Eine besondere Ausführungsform der erfindungsgemäßen Scheibenreinigungsanlage kann unabhängig vom Fahrzeug bereits durch einen Zulieferer montiert werden, wenn das Karosserieelement ein Stoßfänger eines Kraftfahrzeugs ist.

Herkömmliche Scheibenreinigungsanlagen haben häufig den Nachteil, daß sie zum Gebrauch zunächst in eine Betriebsstellung verfahren werden müssen und erst im Anschluß daran der eigentliche Waschvorgang beginnen kann. Der Wascharm befindet sich bereits in einer betriebsbereiten Position, wenn gemäß einer weiteren erfindungsgemäßen Ausführungsform die Waschdüse auf der Oberseite des Bauteils angeordnet ist.

Eine Scheibenreinigungsanlage der genannten Art soll gerade unter widrigen Umweltbedingungen zuverlässig arbeiten. Bei den freiliegend angeordneten Wascharmen der herkömmlichen Art kann die Waschdüse beispielsweise im Winter von einer Schneeschicht bedeckt sein, wodurch die Wirkung solcher Waschdüsenanordnungen erheblich eingeschränkt ist. Gegen Umwelteinflüsse ist die Scheibenreinigungsanlage weitgehend geschützt, wenn die Waschdüse auf der Unterseite des Bauteils angeordnet ist. Bei dieser Ausführung verbleibt die Waschdüse in der Ruhestellung im Inneren der sie umgebenden Karosserieelemente und ist damit lediglich in der Betriebsstellung sichtbar.

Die erfindungsgmäße Scheibenreinigungsanlage ist besonders wirtschaftlich herstellbar, wenn der Montageaufwand durch eine Reduzierung der Bauteile verringert wird. Eine entsprechende Ausführungsform, bei der das Bauteil zusammen mit der Waschdüse einteilig ausgeführt ist, läßt sich erzielen, wenn das Bauteil als Waschdüse ausgeführt ist.

Das erfindungsgemäße, aus der Kontur eines Karosserieelementes heraus verfahrbare Bauteil setzt der Luftströmung auch bei hohen Geschwindigkeiten einen geringen Widerstand entgegen und ist besonders einfach anzuordnen, wenn das Bauteil um ein quer zur Fahrzeuglängsachse verlaufendes Gelenk schwenkbar ist.

Je nach Beschaffenheit der Oberfläche ist die Anordnung eines Gelenks für das Bauteil mit großem konstruktivem Aufwand verbunden. Daher kommt eine weitere, für diesen Zweck besonders vorteilhafte Ausführungsform der Erfindung ohne ein Gelenk aus. Eine solche Ausführungsform läßt sich besonders wirkungsvoll auch bei stark gewölbten Oberflächen und schwierigen räumlichen Bedingungen verwirklichen, wenn das Bauteil mittels des Motors aus der Kontur des Karosserieelements heraus parallel verfahrbar ist.

Die Scheibenreinigungsanlage hat gemäß einer anderen vorteilhaften Weiterbildung der Erfindung einen besonders geringen Waschflüssigkeitsverbrauch bei einer besonders hohen Reinigungswirkung, wenn sie eine Steuerungseinrichtung zum Fördern der Waschflüssigkeit zu den Waschdüsen zu Beginn und am Ende eines vorgesehenen Zeitintervalls aufweist. Durch diese Gestaltung wird zunächst auf der Scheibe befindlicher Schmutz aufgeweicht und anschließend weggespült.

Heutige Kraftfahrzeuge haben eine Scheibenreinigungsanlage mit einer Waschflüssigkeitspumpe zum Fördern von Waschflüssigkeit zu einer Frontscheibe. Die erfindungsgemäße Scheibenreinigungsanlage erfordert einen besonders geringen baulichen Aufwand, wenn die Waschflüssigkeitspumpe zum wahlweisen Fördern von Waschflüssigkeit in der einen Richtung zu der Frontscheibe und in der anderen Richtung zu den Scheiben von Kraftfahrzeugleuchten förderbar ist. Hierdurch lassen sich die Frontscheibe oder die Scheiben der Kraftfahrzeugleuchten nacheinander reinigen.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Figur 1: einen Wascharm einer Scheibenreinigungsanlage mit angrenzenden Bauteilen eines Kraftfahrzeuges nach dem Stand der Technik
- Figur 2: den Wascharm aus Figur 1 in einem Längsschnitt,
- Figur 3a, 3b: eine Fluidic-Düse aus Figur 2 in Schnittdarstellungen mit darin eingezeichneten Strömungen,
- Figur 4: ein Schaltbild einer erfindungsgemäßen Scheibenreinigungsanlage,
- Figur 5: eine weitere Ausführungsform eines vor einer Scheibe eines Scheinwerfers angeordneten Wascharms in einer Schnittdarstellung,
- Figur 6: den Wascharm mit der Scheibe aus Figur 5 von vorne gesehen,
- Figur 7: eine Scheibenreinigungsanlage mit einer auf zwei Bügeln angeordneten Waschdüse,
- Figur 8: eine Schnittdarstellung durch die Scheibenreinigungsanlage aus Figur 7 entlang der Linie VIII - VIII,
- Figur 9: eine schematische Darstellung einer weiteren Ausführungsform der erfindungsgemäßen Scheibenreinigungsanlage,
- Figur 10: eine schematische Darstellung einer weiteren Ausführungsform einer erfindungsgemäßen Scheibenreinigungsanlage.

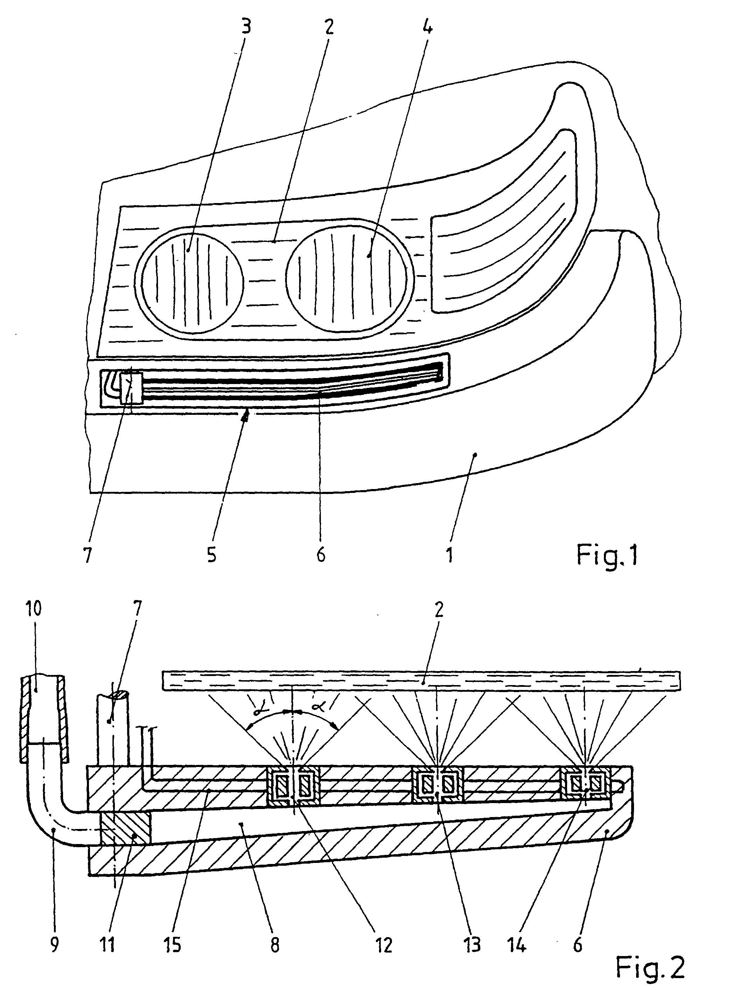

Die Figur 1 zeigt in einer perspektivischen Darstellung einen vorderen linken Bereich eines Kraftfahrzeuges mit einer Stoßstange 1 und zwei hinter einer gemeinsamen Scheibe 2 angeordnete, als Frontscheinwerfer ausgebildete Kraftfahrzeugleuchten 3, 4. Die Stoßstange 1 hat eine unmittelbar unterhalb der Scheibe 2 befindliche Ausnehmung 5, in der ein Wascharm 6 zum Reinigen der Scheibe 2 um eine Schwenkachse 7 schwenkbar gelagert ist. In der eingezeichneten Stellung ist der Wascharm 6 in der Ausnehmung 5 versenkt.

Der Wascharm 6 wird zur Reinigung der Scheibe 2 aus der Ausnehmung 5 heraus und über die Scheibe 2 geschwenkt. Die Figur 2 zeigt den über der Scheibe 2 befindlichen Wascharm 6 beim Reinigen der Scheibe 2 in einer Schnittdarstellung. Deutlich ist zu erkennen, daß der Wascharm 6 zur Aufnahme eines Waschflüssigkeitskanals 8 rohrförmig gestaltet ist und einen Anschluß 9 für eine Waschflüssigkeitsleitung 10 aufweist. Der Waschflüssigkeitskanal 8 hat eine von dem Anschluß 9 der Waschflüssigkeitsleitung 10 kontinuierliche Verjüngung. in dem Waschflüssigkeitskanal 8 ist ein Rückschlagventil 11 angeordnet, welches ein Eindringen von Luft in die Waschflüssigkeitsleitung 10 verhindert. Durch den Waschflüssigkeitskanal 8 gelangt Waschflüssigkeit zu mehreren auf die Scheibe 2 gerichteten Waschdüsen 12 - 14. Weiterhin hat der Waschflüssigkeitskanal 8 im Bereich der Waschdüsen 12 - 14 einen Heizdraht 15. Die Waschdüsen 12 - 14 sind als sogenannte Fluidic-Düsen ausgebildet und erzeugen einen um einen Winkel α seitlich oszillierenden Waschflüssigkeitsstrahl. Hierdurch weisen die Waschdüsen 12 - 14 jeweils einen streifenförmigen Sprühbereich auf, wobei sich jeweils zwei benachbarte Sprühbereiche geringfügig überlappen. Bei einem Schwenken des Wascharms 6 um die Schwenkachse 7 und gleichzeitigem Sprühen der Waschdüsen 12 - 14 wird der Waschflüssigkeitsstrahl über die gesamte Scheibe 2 geführt.

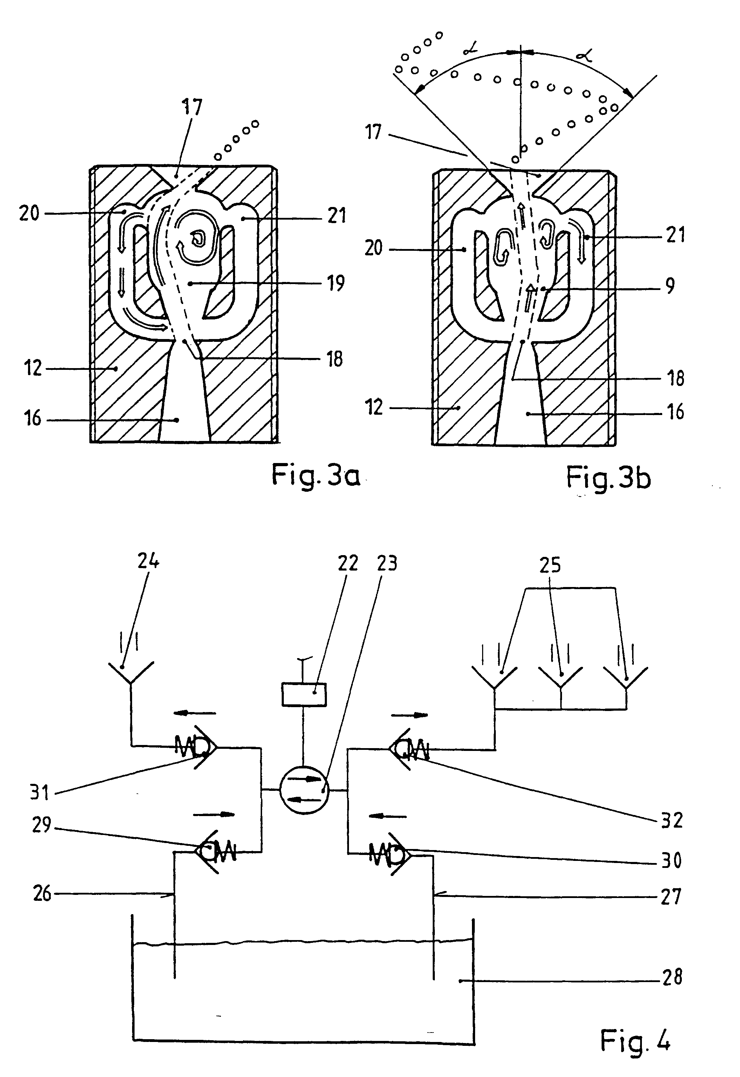

Eine der als Fluidic-Düsen ausgebildeten Waschdüsen 12 - 14 aus Figur 2 ist in den Figuren 3a und 3b im Schnitt dargestellt. Die Waschdüse 12 hat einen mit dem in Figur 2 dargestellten Waschflüssigkeitskanal 8 verbundenen Einlaßkanal 16 und einen trichterförmigen Auslaß 17. Am Ende des Einlaßkanals 16 ist eine Düse 18 angeordnet, die durch den Einlaßkanal 16 fließende Waschflüssigkeit zu einer schmalen Hauptströmung bündelt und einer Wirbelkammer 19 zuführt. Das strömungsseitige Ende der Wirbelkammer 19 ist mit zwei Rückflußkanälen 20, 21 mit dem Eingangsbereich der Wirbelkammer 19 verbunden. Die Hauptströmung tritt zunächst in die Wirbelkammer 19 ein und erzeugt dort eine Zirkulationsströmung, wodurch die Hauptströmung zu der einen Seite hin ausgelenkt wird. Durch den der Zirkulationsströmung gegenüberliegenden Rückflußkanal 20 strömt Waschflüssigkeit in den Eingangsbereich der Wirbelkammer 19 und drückt die Hauptströmung zu der anderen Seite. Hierdurch oszilliert der aus dem Auslaß 17 austretende Waschflüssigkeitsstrahl ständig um den Winkel α.

Die Figur 4 zeigt ein Schaltbild einer Scheibenreinigungsanlage mit einer von einer Steuerungseinrichtung 22 angesteuerten Waschflüssigkeitspumpe 23, die zum wahlweisen Fördern in beide Richtungen ausgebildet ist. An der Waschflüssigkeitspumpe 23 sind eine Waschdüse 24 für eine nicht dargestellte Frontscheibe eines Kraftfahrzeuges und mehrere zur Reinigung von ebenfalls nicht dargestellten Scheiben von Kraftfahrzeugleuchten vorgesehene Waschdüsen 25 angeschlossen. Von der Waschflüssigkeitspumpe 23 führen zwei Waschflüssigkeitsleitungen 26, 27 zu einem Waschflüssigkeitsbehälter 28. Vor den Waschdüsen 24, 25 und in den zu dem Waschflüssigkeitsbehälter 28 führenden Waschflüssigkeitsleitungen 26, 27 sind jeweils Rückschlagventile 29 - 32 angeordnet. Zur Verdeutlichung sind die Fließrichtungen der Waschflüssigkeit mit Pfeilen gekennzeichnet. In Abhängigkeit von der Drehrichtung der Waschflüssigkeitspumpe 23 wird die Waschflüssigkeit wahlweise zu der Waschdüse 24 der Frontscheibe oder zu den Waschdüsen 25 der Scheiben der Kraftfahrzeugleuchten gefördert.

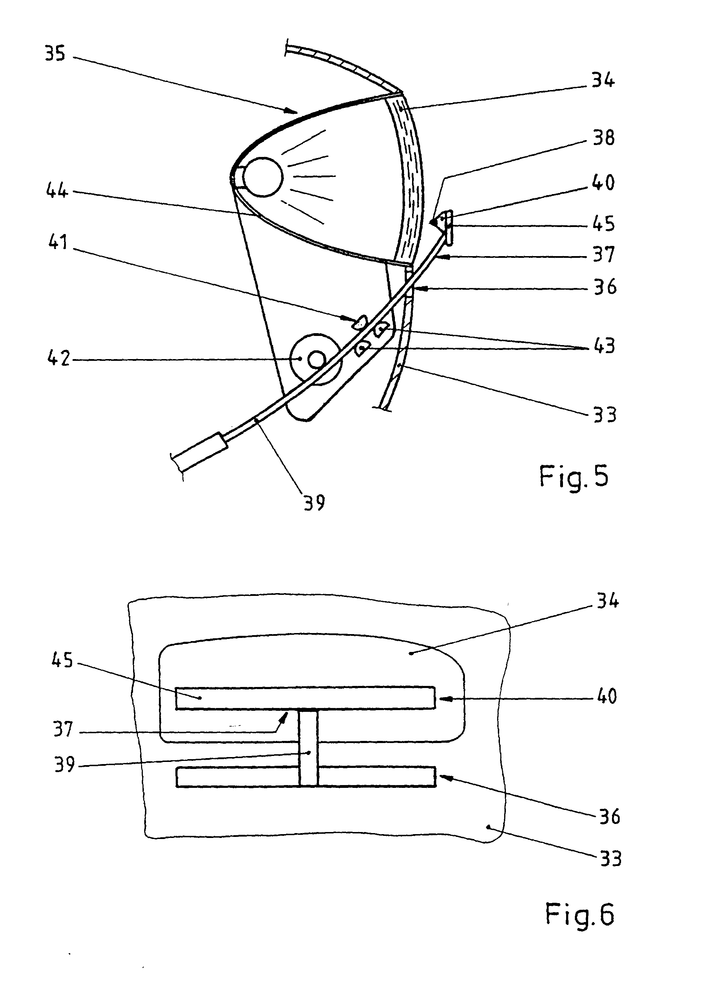

Die Figur 5 zeigt in einer Schnittdarstellung eine in einem Karosserieblech 33 eines Kraftfahrzeuges angeordnete, als Scheinwerfer ausgebildete Kraftfahrzeugleuchte 35. Die Kraftfahrzeugleuchte 35 weist eine gewölbte Scheibe 34 auf. Das Karosserieblech 33 hat eine Ausnehmung 36, durch die ein Wascharm 37 einer Scheibenreinigungsanlage geführt ist. Auf dem Wascharm sind Waschdüsen 38 angeordnet die der Scheibe 34 mit geringem Abstand gegenüberstehen.

Die Figur 6 zeigt, daß der Wascharm 37 T-förmig gestaltet ist und eine Schubstange 39 und quer dazu angeordnet einen mehrere in Figur 5 dargestellte Waschdüsen 38 aufweisenden Düsenträger 40 aufweist. Die Schubstange 39 hat eine der Wölbung der Scheibe 34 entsprechende Biegung und ist in einer Führung 41 längenverschiebbar gelagert. Die Schubstange 39 wird von einem Elektromotor 42 angetrieben. Die Führung 41 der Schubstange 39 besteht aus Leitelementen 43 und ist einteilig mit einem Gehäuse 44 der Kraftfahrzeugleuchte 35 gefertigt. Der Düsenträger 40 weist auf seiner der Scheibe 34 abgewandten Seite eine Abdekkung 45 auf, die zum Verschließen der Ausnehmung 36 des Karosserieblechs 33 in einer Grundstellung der Scheibenwaschanlage vorgesehen ist.

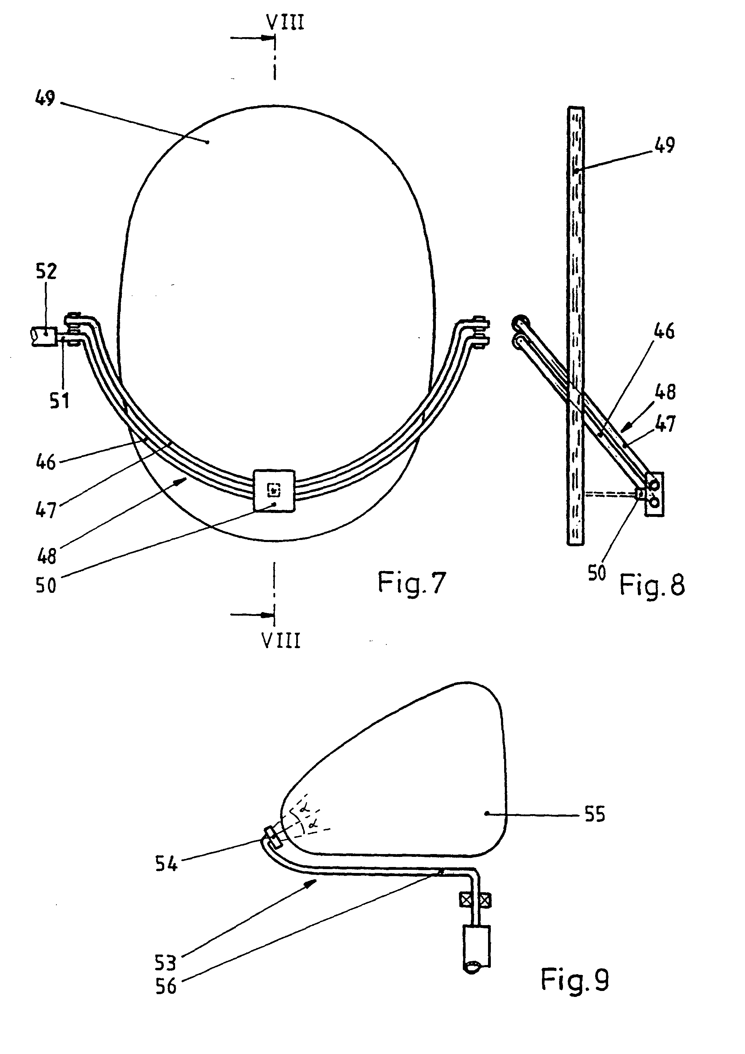

In Figur 7 ist eine Scheibenreinigungsanlage mit einem zwei parallel zueinander angeordnete Bügel 46, 47 aufweisenden Wascharm 48 dargestellt. Die Bügel 46, 47 sind jeweils an zwei gegenüberliegenden Seiten einer Scheibe 49 schwenkbar gelagert und werden beispielsweise elektromotorisch angetrieben. In der Mitte des Wascharms 48 ist eine Waschdüse 50 angeordnet. Die linke Hälfte einer der Bügel 46 ist rohrförmig gestaltet und hat einen Anschluß 51 für eine Waschflüssigkeitsleitung 52. Hierdurch wird die Waschdüse 50 mit Waschflüssigkeit, versorgt.

Die Figur 8 zeigt, daß die Waschdüse 50 ihren Abstand zu der Scheibe 49 während ihrer Bewegung verändert. Dieser Abstand ist in einer mittleren Position der Waschdüse 50 über der Scheibe 49 am größten und verringert sich über den Randbereichen der Scheibe 49. Die Waschdüse 50 ist als eine in den Figuren 3a und 3b dargestellte Fluidic-Düse ausgebildet. Weiterhin ist die Waschdüse 50 gegenüber den Bügeln 46, 47 schwenkbar gelagert. Hierdurch wird die Waschflüssigkeit von der Waschdüse 50 in jeder Stellung senkrecht auf die Scheibe 49 gesprüht. Selbstverständlich kann die Waschdüse 50 auch in Bewegungsrichtung geringfügig geneigt sein, so daß auf der Scheibe 49 haftender Schmutz in eine Richtung weggespült wird.

In Figur 9 ist eine Scheibenreinigungsanlage mit einer auf einem Wascharm 53 angeordneten Waschdüse 54 dargestellt. Der Wascharm 53 ist in einem seitlichen Bereich einer Scheibe 55 schwenkbar gelagert und hat einen die Scheibe 55 teilweise umgreifenden Bügel 56. Die Waschdüse 54 ist ebenfalls als eine in den Figuren 3a und 3b dargestellte Fluidic-Düse ausgebildet und mit einer geringen Neigung quer zu ihrer Bewegungsrichtung angeordnet. Hierdurch wird ein der Form der Scheibe 55 angepaßter Sprühbereich beim Bewegen der Waschdüse 54 erzeugt. Der Wascharm 53 läßt sich von einem nicht dargestellten Elektromotor über einen Winkelbereich von 90° schwenken.

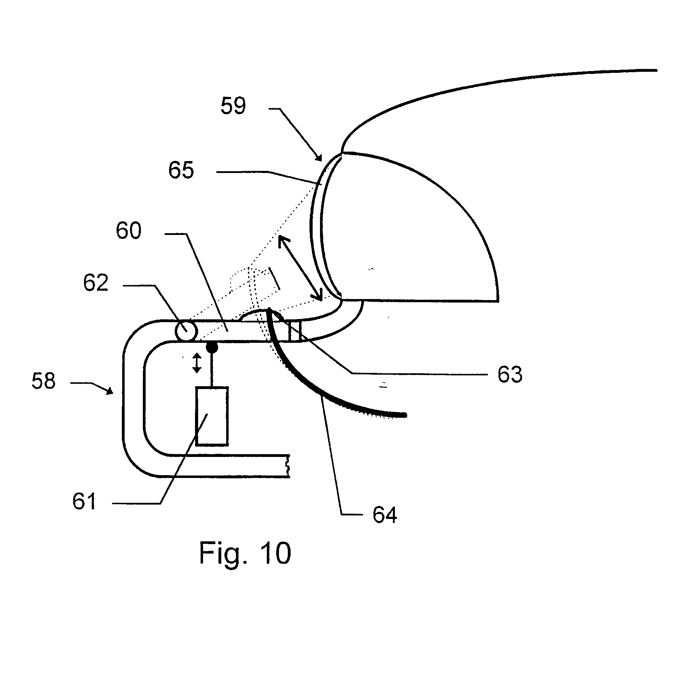

Die Figur 10 zeigt in einer Schnittdarstellung ein als Stoßfänger ausgebildetes Karosserieelement 58 (Stoßfänger) mit einer angrenzenden Kraftfahrzeugleuchte 59. Als Wascharm ist bei dieser Ausführungsform ein Bauteil 60 vorgesehen, welches als Klappe ausgebildet ist und mittels eines Motors 61 um ein Gelenk 62 verschwenkt werden kann. Das Bauteil hat auf seiner Oberseite eine Waschdüse 63 mit einer daran angeschlossenen Waschflüssigkeitsleitung 64. Der Waschstrahl der Waschdüse 63 ist mittels der Bewegung des Bauteils 60 von einer unteren Position, in welcher der Strahl auf den unteren Rand einer Scheibe 65 der Kraftfahrzeugleuchte 59 gerichtet ist, bis in eine obere Position, in welcher der Strahl auf den oberen Rand der Scheibe 65 der Kraftfahrzeugleuchte 59 gerichtet ist, lenkbar.

Nicht gezeigt ist, daß das Bauteil 60 auch beim Spritzen der Düse 63 statt hochzuklappen parallel zu sich selbst aus der Kontur des als Stoßfänger ausgebildeten Karosserieelementes 58 fahren kann.

## Patentansprüche

1. Ausschließlich durch Ansprühen mit Waschflüssigkeit arbeitende Scheibenreinigungsanlage für Scheiben eines Kraftfahrzeuges, insbesondere für Scheiben von Kraftfahrzeugleuchten, mit einem von einem Elektromotor mit Abstand über die Scheibe beweglichen Wascharm und mit einer auf dem Wascharm angeordneten Waschdüse, welche zum Sprühen von Waschflüssigkeit auf die Scheibe vorgesehen ist, **dadurch gekennzeichnet, daß** die Waschdüse (25, 38, 50, 54, 63) zum Besprühen eines Teilbereichs der Scheibe (34, 49, 55, 65) ausgebildet und derart von dem Wascharm (37, 48, 53) über den zu reinigenden Bereich der Scheibe (34, 49, 55, 65) bewegbar ist, daß die Projektion der Bewegung der Waschdüse (38, 50, 54, 63) auf die Scheibe (34, 49, 55, 65) linear ist.

2. Scheibenreinigungsanlage nach Anspruch 1, **dadurch gekennzeichnet, daß** die Waschdüse (12 - 14, 25, 38, 50, 54, 63) als Fluidic-Düse mit einem im wesentlichen quer zu der Bewegungsrichtung des Wascharms (37, 48, 53) oszillierenden Waschflüssigkeitsstrahl ausgebildet ist.

3. Scheibenreinigunsanlage nach Anspruch 1 oder 2, **dadurch gekennzeichnet, daß** der Wascharm zur Aufnahme eines zu mehreren Waschdüsen (38, 50, 54) führenden Waschflüssigkeitskanals (8) rohrförmig gestaltet ist und einen Anschluß (9) für eine Waschflüssigkeit (10) aufweist.

4. Scheibenreinigungsanlage nach Anspruch 3, **dadurch gekennzeichnet, daß** der Waschflüssigkeitskanal (8) von dem Anschluß (9) der Waschflüssigkeitsleitung (10) aus gesehen eine sich verjüngende innere Kontur aufweist.

5. Scheibenreinigungsanlage nach zumindest einem der vorhergehenden Ansprüche, **dadurch gekennzeichnet, daß** in dem Waschflüssigkeitskanal (8) ein Rückschlagventil (11) angeordnet ist.

6. Scheibenreinigungsanlage nach zumindest einem der vorhergehenden Ansprüche, **dadurch gekennzeichnet, daß** in dem Waschflüssigkeitskanal (8) und/oder an den Waschdüsen (38, 50, 54, 63) ein Heizelement (Heizdraht 15) angeordnet ist.

7. Scheibenreinigungsanlage nach zumindest einem der vorhergehenden Ansprüche, **dadurch gekennzeichnet, daß** der Wascharm (48) schwenkbar gelagert ist.

8. Scheibenreinigungsanlage nach zumindest einem der vorhergehenden Ansprüche, **dadurch gekennzeichnet, daß** sie Mittel (Bügel 46, 47, 56) zum Einstellen des Abstandes der Waschdüse (50, 54) von der Scheibe (49, 55) während der Bewegung der Waschdüse (50, 54) aufweist.

9. Scheibenreinigungsanlage nach zumindest einem der vorhergehenden Ansprüche, **dadurch gekennzeichnet, daß** der Wascharm (48, 53) einen in einem seitlichen Bereich der Scheibe (49, 55) schwenkbar gelagerten, in Grundstellung die Scheibe (49, 55) zumindest teilweise umgreifenden Bügel (46, 47, 56) aufweist.

10. Scheibenreinigungsanlage nach zumindest einem der vorhergehenden Ansprüche, **dadurch gekennzeichnet, daß** der Wascharm (48) einen an zwei gegenüberliegenden Seiten der Scheibe (49) gelagerten Bügel (46, 47) aufweist.

11. Scheibenreinigungsanlage nach zumindest einem der vorhergehenden Ansprüche, **dadurch gekennzeichnet, daß** der Wascharm (48) zwei parallel verlaufende Bügel (46, 47) aufweist und die Waschdüse (50) gegenüber jedem der Bügel (46, 47) schwenkbar gelagert ist.

12. Scheibenreinigungsanlage nach zumindest einem der vorhergehenden Ansprüche, **dadurch gekennzeichnet, daß** die Waschdüse (54) quer zu ihrer Bewegungsrichtung geneigt ist.

13. Scheibenreinigungsanlage nach zumindest einem der vorhergehenden Ansprüche, **dadurch gekennzeichnet, daß** der Wascharm (37) eine längs verschieblich gelagerte, der Kontur der Scheibe (34) entsprechend gestaltete Schubstange (39) hat.

14. Scheibenreinigungsanlage nach zumindest einem der vorhergehenden Ansprüche, **dadurch gekennzeichnet, daß** die Waschdüsen (38) in einer Grundstellung in einer Ausnehmung (36) eines an der Scheibe (34) angrenzenden Bauteils (Karosserieblech 33) des Kraftfahrzeugs versenkt sind.

15. Scheibenreinigungsanlage nach Anspruch 14, **dadurch gekennzeichnet, daß** der Wascharm (37) eine die Ausnehmung (36) in Grundstellung verschließende Abdeckung (45) hat.

16. Scheibenreinigungsanlage nach zumindest einem der vorhergehenden Ansprüche, **dadurch gekennzeichnet, daß** der Wascharm (37, 48, 53) aus Kunststoff in Spritzgießverfahren gefertigt ist.

17. Scheibenreinigungsanlage nach zumindest einem der vorhergehenden Ansprüche, **dadurch gekennzeichnet, daß** eine Führung (41) der Schubstange (39) oder eine Lagerung des Wascharms einteilig mit einem Gehäuse (44) der Kraftfahrzeugleuchte (35) gefertigt ist.

18. Scheibenreinigungsanlage nach zumindest einem der vorhergehenden Ansprüche, **dadurch gekennzeichnet, daß** der Wascharm als ein entsprechend der Kontur eines Karosserieelementes (58) ausgeformtes Bauteil (60) ausgebildet und aus diesem heraus beweglich angeordnet ist.

19. Scheibenreinigungsanlage nach Anspruch 18, **dadurch gekennzeichnet, daß** das Karosserieelement (58) ein Stoßfänger eines Kraftfahrzeugs ist.

20. Scheibenreinigungsanlage nach Anspruch 18, **dadurch gekennzeichnet, daß** die Waschdüse (63) auf der Oberseite des Bauteils (60) angeordnet ist.

21. Scheibenreinigungsanlage nach Anspruch 18, **dadurch gekennzeichnet, daß** die Waschdüse (63) auf der Unterseite des Bauteils (60) angeordnet ist.

22. Scheibenreinigungsanlage nach Anspruch 18, **dadurch gekennzeichnet, daß** das Bauteil (60) als Waschdüse (63) aufgeführt ist.

23. Scheibenreinigungsanlage nach Anspruch 18, **dadurch gekennzeichnet, daß** das Bauteil (60) um ein quer zur Fahrzeuglängsachse verlaufendes Gelenk (62) schwenkbar ist.

24. Scheibenreinigungsanlage nach Anspruch 18, **dadurch gekennzeichnet, daß** das Bauteil (60) mittels des Motors (61) aus der Kontur des Karosserieelements (58) heraus parallel verfahrbar angeordnet ist.

25. Scheibenreinigungsanlage nach zumindest einem der vorhergehenden Ansprüche, **dadurch gekennzeichnet, daß** sie eine Steuerungseinrichtung (22) zum Fördern der Waschflüssigkeit zu den Waschdüsen (24, 25) zu Beginn und am Ende eines vorgesehenen Zeitintervalls aufweist.

26. Scheibenreinigungsanlage nach zumindest einem der vorhergehenden Ansprüche mit einer Waschflüssigkeitspumpe zum Fördern von Waschflüssigkeit zu einer Frontscheibe des Kraftfahrzeuges, **dadurch gekennzeichnet, daß** die Waschflüssigkeitspumpe (23) zum wahlweisen Fördern von Waschflüssigkeit in zwei Richtungen ausgebildet ist, wobei die Waschflüssigkeit in der einen Richtung zu der Frontscheibe und in der anderen Richtung zu den Scheiben (34, 61) von Kraftfahrzeugleuchten (35, 63) förderbar ist.

## Claims

1. Shield cleaning system, operating solely by spraying with washing fluid, for shields of a motor vehicle, in particular for shields of motor vehicle lights, with a washing arm movable over and at a distance from the shield by an electric motor and with a washing nozzle which is arranged on the washing arm and which is provided for spraying washing fluid onto the shield, **characterized in that** the washing nozzle (25, 38, 50, 54, 63) is designed for spraying a part region of the shield (34, 49, 55, 65) and can be moved by the washing arm (37, 48, 53) over that region of the shield (34, 49, 55, 65) which is to be cleaned in such a way that the projection of the movement of the washing nozzle (38, 50, 54, 63) on the shield (34, 49, 55, 65) is linear.

2. Shield cleaning system according to Claim 1, **characterized in that** the washing nozzle (12-14, 25, 38, 50, 54, 63) is designed as a fluidic nozzle with a washing fluid jet oscillating essentially transversely to the direction of movement of the washing arm (37, 48, 53).

3. Shield cleaning system according to Claim 1 or 2, **characterized in that** the washing arm is of tubular design for receiving a washing fluid duct (8) leading to a plurality of washing nozzles (38, 50, 54) and has a connection (9) for a washing fluid (10).

4. Shield cleaning system according to Claim 3, **characterized in that** the washing fluid duct (8) has a tapering inner contour, as seen from the connection (9) of the washing fluid line (10).

5. Shield cleaning system according to at least one of the preceding claims, **characterized in that** a nonreturn valve (11) is arranged in the washing fluid duct (8).

6. Shield cleaning system according to at least one of the preceding claims, **characterized in that** a heating element (resistance wire 15) is arranged in the washing fluid duct (8) and/or at the washing nozzles (38, 50, 54, 63).

7. Shield cleaning system according to at least one of the preceding claims, **characterized in that** the washing arm (48) is mounted pivotably.

8. Shield cleaning system according to at least one of the preceding claims, **characterized in that** there are means (yokes 46, 47, 56) for adjusting the distance of the washing nozzle (50, 54) from the shield (49, 55) during the movement of the washing nozzle (50, 54).

9. Shield cleaning system according to at least one of the preceding claims, **characterized in that** the washing arm (48, 53) has a yoke (46, 47, 56) mounted pivotably in a lateral region of the shield (49, 55) and at least partially surrounding the shield (49, 55) in the basic position.

10. Shield cleaning system according to at least one of the preceding claims, **characterized in that** the washing arm (48) has a yoke (46, 47) mounted on two opposite sides of the shield (49).

11. Shield cleaning system according to at least one of the preceding claims, **characterized in that** the washing arm (48) has two yokes (46, 47) running parallel and the washing nozzle (50) is mounted pivotably relative to each of the yokes (46, 47).

12. Shield cleaning system according to at least one of the preceding claims, **characterized in that** the washing nozzle (54) is inclined transversely to its direction of movement.

13. Shield cleaning system according to at least one of the preceding claims, **characterized in that** the washing arm (37) has a push rod (39) mounted so as to be longitudinally displaceable and shaped according to the contour of the shield (34).

14. Shield cleaning system according to at least one of the preceding claims, **characterized in that**, in a basic position, the washing nozzles (38) are countersunk in a recess (36) of a motor vehicle component (body panel 33) adjacent to the shield (34).

15. Shield cleaning system according to Claim 14, **characterized in that** the washing arm (37) has a cover (45) closing the recess (36) in the basic position.

16. Shield cleaning system according to at least one of the preceding claims, **characterized in that** the washing arm (37, 48, 53) is produced from plastic by the injection moulding method.

17. Shield cleaning system according to at least one of the preceding claims, **characterized in that** a guide (41) of the push rod (39) or a mounting of the washing arm is produced in one piece with a housing (44) of the motor vehicle light (35).

18. Shield cleaning system according to at least one of the preceding claims, **characterized in that** the washing arm is designed as a component (60) shaped according to the contour of a body element (58) and is arranged so as to be movable out of said body element.

19. Shield cleaning system according to Claim 18, **characterized in that** the body element (58) is a bumper of a motor vehicle.

20. Shield cleaning system according to Claim 18, **characterized in that** the washing nozzle (63) is arranged on the top side of the component (60).

21. Shield cleaning system according to Claim 18, **characterized in that** the washing nozzle (63) is arranged on the underside of the component (60).

22. Shield cleaning system according to Claim 18, **characterized in that** the component (60) is designed as a washing nozzle (63).

23. Shield cleaning system according to Claim 18, **characterized in that** the component (60) is pivotable about a joint (62) running transversely to the longitudinal axis of the motor vehicle.

24. Shield cleaning system according to Claim 18, **characterized in that** the component (60) is arranged so as to be movable out of the contour of the body element (58) in parallel by means of the motor (61).

25. Shield cleaning system according to at least one of the preceding claims, **characterized in that** there is a control device (22) for conveying the washing fluid to the washing nozzles (24, 25) at the start and end of an intended time interval.

26. Shield cleaning system according to at least one of the preceding claims, with a washing fluid pump for conveying washing fluid to a front shield of the motor vehicle, **characterized in that** the washing fluid pump (23) is designed for selectively conveying washing fluid in two directions, the washing fluid being capable of being conveyed in one direction to the front shield and in the other direction to the shields (34, 61) of motor vehicle lights (35, 63).

## Revendications

1. Appareil de lavage de vitrage permettant de nettoyer les vitres d'un véhicule automobile, notamment les verres recouvrant les phares d'un véhicule automobile, fonctionnant exclusivement par pulvérisation du liquide de lavage et comprenant un bras de lavage se déplaçant, grâce à un moteur électrique, devant le verre, à une certaine distance de celui-ci et un gicleur monté sur le bras de lavage et destiné à pulvériser du liquide de lavage sur le verre, **caractérisé en ce que** le gicleur (25, 38, 50, 54, 63) est conçu pour laver une partie du verre (34, 49, 55, 65) et qu'il peut être déplacé par le bras de lavage (37, 48, 53) devant la partie du verre à laver (34, 49, 55, 65) de manière à ce que la projection du mouvement effectué par le gicleur (38, 50, 54, 63) sur le verre (34, 49, 55, 65) soit linéaire.

2. Appareil de lavage de vitrage selon la revendication 1, **caractérisé en ce que** le gicleur (12 - 14, 25, 38, 50, 54, 63) est réalisé sous la forme d'un gicleur fluidique doté d'un jet de liquide de lavage oscillant essentiellement perpendiculairement par rapport au sens de déplacement du bras de lavage (37, 48, 53).

3. Appareil de lavage de vitrage selon la revendication 1 ou 2, **caractérisé en ce que** en vue de pouvoir recevoir un canal de liquide de lavage (8) conduisant à plusieurs gicleurs (38, 50, 54), le bras de lavage présente une forme tubulaire et est doté d'une pièce de raccordement (9) pour une conduite de liquide de lavage (10).

4. Appareil de lavage de vitrage selon la revendication 3, **caractérisé en ce que** le canal de liquide de lavage (8) présente un contour intérieur qui va en se rétrécissant à partir de la pièce de raccordement (9) de la conduite de liquide de lavage (10).

5. Appareil de lavage de vitrage selon au moins l'une des revendications précédentes, **caractérisé en ce qu'**un clapet anti-retour (11) est disposé dans le canal de liquide de lavage (8).

6. Appareil de lavage de vitrage selon au moins l'une des revendications précédentes, **caractérisé en ce qu'**un élément chauffant (filament de chauffage 15) est disposé dans le canal de liquide de lavage (8) et/ou dans les gicleurs (38, 50, 54, 63).

7. Appareil de lavage de vitrage selon au moins l'une des revendications précédentes, **caractérisé en ce que** le bras de lavage (48) est monté pivotant.

8. Appareil de lavage de vitrage selon au moins l'une des revendications précédentes, **caractérisé en ce qu'**il présente des moyens (anses 46, 47, 56) destinés à régler la distance séparant le gicleur (50, 54) du verre (49, 55) pendant le déplacement du gicleur (50, 54).

9. Appareil de lavage de vitrage selon au moins l'une des revendications précédentes, **caractérisé en ce que** le bras de lavage (48, 53) présente une anse (46, 47, 56) montée de manière pivotante au niveau d'une partie latérale du verre (49, 55) et, en position de base, entourant au moins partiellement le verre (49, 55).

10. Appareil de lavage de vitrage selon au moins l'une des revendications précédentes, **caractérisé en ce que** le bras de lavage (48) présente une anse (46, 47) fixée sur deux côtés opposés du verre (49).

11. Appareil de lavage de vitrage selon au moins l'une des revendications précédentes, **caractérisé en ce que** le bras de lavage (48) présente deux anses parallèles (46, 47) et que le gicleur (50) est monté de manière à pouvoir pivoter par rapport à chacune des anses (46, 47).

12. Appareil de lavage de vitrage selon au moins l'une des revendications précédentes, **caractérisé en ce que** le gicleur (54) est incliné transversalement par rapport à sa direction de déplacement.

13. Appareil de lavage de vitrage selon au moins l'une des revendications précédentes, **caractérisé en ce que** le bras de lavage (37) est doté d'une tige de poussée (39) à coulissement longitudinal, conçue pour épouser le contour du verre (34).

14. Appareil de lavage de vitrage selon au moins l'une des revendications précédentes, **caractérisé en ce que** les gicleurs (38) sont escamotés, en position de base, dans un évidement (36) d'un élément de construction (tôle de carrosserie 33) du véhicule automobile attenant au verre (34).

15. Appareil de lavage de vitrage selon la revendication 14, **caractérisé en ce que** le bras de lavage (37) est doté d'un couvercle (45) destiné à obturer, en position de base, l'éuidement (36).

16. Appareil de lavage de vitrage selon au moins l'une des revendications précédentes, **caractérisé en ce que** le bras de lavage (37, 48, 53) est fabriqué en matière plastique, par moulage par injection.

17. Appareil de lavage de vitrage selon au moins l'une des revendications précédentes, **caractérisé en ce qu'**un guide (41) de la tige de poussée (39) ou qu'un support du bras de lavage est fabriqué d'une seule pièce avec le boîtier (44) du phare de véhicule automobile (35).

18. Appareil de lavage de vitrage selon au moins l'une des revendications précédentes, **caractérisé en ce que** le bras de lavage est conçu en tant qu'élément de construction (60) épousant le contour d'un élément de carrosserie (58) et qu'il est monté mobile de manière à pouvoir en sortir.

19. Appareil de lavage de vitrage selon la revendication 18, **caractérisé en ce que** l'élément de carrosserie (58) est un bouclier de véhicule automobile.

20. Appareil de lavage de vitrage selon la revendication 18, **caractérisé en ce que** le gicleur (63) est placé sur la partie supérieure de l'élément de construction (60).

21. Appareil de lavage de vitrage selon la revendication 18, **caractérisé en ce que** le gicleur (63) est placé sur la partie inférieure de l'élément de construction (60).

22. Appareil de lavage de vitrage selon la revendication 18, **caractérisé en ce que** l'élément de construction (60) présente la forme d'un gicleur (63).

23. Appareil de lavage de vitrage selon la revendication 18, **caractérisé en ce que** l'élément de construction (60) est monté pivotant sur une articulation (62) disposée transversalement par rapport à l'axe longitudinal du véhicule automobile.

24. Appareil de lavage de vitrage selon la revendication 18, **caractérisé en ce que** l'élément de construction (60), est monté mobile au moyen du moteur (61), pour sortir hors du contour de l'élément de carrosserie (58) en effectuant un mouvement parallèle à lui-même.

25. Appareil de lavage de vitrage selon au moins l'une des revendications précédentes, **caractérisé en ce qu'**il présente un appareil de commande (22) destiné à acheminer le liquide de lavage jusqu'aux gicleurs (24, 25) au début et à la fin d'un intervalle de temps prédéfini.

26. Appareil de lavage de vitrage selon au moins l'une des revendications précédentes, comprenant une pompe de liquide lavage (23) destinée à acheminer le liquide de lavage vers un pare-brise de véhicule automobile, **caractérisé en ce que** la pompe de liquide de lavage (23) est conçue pour acheminer le liquide de lavage, au choix, dans deux sens différents, ledit liquide de lavage étant acheminé, dans un sens, en direction du pare-brise et, dans l'autre sens, en direction des verres (34, 61) de phare de véhicule automobile (35, 63).
